# EUROPEAN PATENT APPLICATION

(11) **EP 4 506 264 A1**
(43) Date of publication of application: **12.02.2025**
(21) Application number: 24188972.4
(22) Date of filing: 16.07.2024
(51) Int. Cl.: B64F 1/00, B64U 70/00, H01M 10/6568

(54) **LIQUID CIRCULATOR**

(30) Priority: 09.08.2023 JP 2023129700
(71) Applicant: Subaru Corporation, Tokyo 150-8554 (JP)
(72) Inventor: OHSONO, Ryuichi, Tokyo, 150-8554 (JP); TACHIKAWA, Ritsuya, Tokyo, 150-8554 (JP); ICHIKI, Toshiyuki, Tokyo, 150-8554 (JP)
(74) Representative: Vossius & Partner Patentanwälte Rechtsanwälte mbB

(57) **Abstract**

A liquid circulator includes a circulation passage, a pump, a cooler, and one or more processors. The circulation passage includes a supply path and a recovery path. The supply path supplies a discharge process liquid to a battery of a mobile body. The recovery path recovers the supplied discharge process liquid. The pump circulates the discharge process liquid in the circulation passage. The cooler cools the discharge process liquid flowing in the circulation passage. The one or more processors control the pump and the cooler to supply the discharge process liquid at a predetermined temperature to the battery.

## Description

### BACKGROUND

### Technical Field

The disclosure relates to a liquid circulator.

### Related Art

Mobile bodies such as multicopters use a battery as an energy source. When a mobile body detects any abnormality during flight, the mobile body makes emergency landing on, for example, a nearest port. The port where the mobile body makes the emergency landing includes fire extinguisher provided for battery fire. For example, reference may be made to Japanese Unexamined Patent Application Publication (JP-A) No. 2022-066797.

### SUMMARY

An aspect of the disclosure provides a liquid circulator. The liquid circulator includes a circulation passage, a pump, a cooler, and one or more processors. The circulation passage includes a supply path and a recovery path. The supply path is configured to supply a discharge process liquid to a battery of a mobile body. The recovery path is configured to recover the supplied discharge process liquid. The pump is configured to circulate the discharge process liquid in the circulation passage. The cooler is configured to cool the discharge process liquid flowing in the circulation passage. The one or more processors are configured to control the pump and the cooler to supply the discharge process liquid at a predetermined temperature to the battery.

### BRIEF DESCRIPTION OF THE DRAWINGS

The accompanying drawings are included to provide a further understanding of the disclosure, and are incorporated in and constitute a part of this specification. The drawings illustrate embodiments and, together with the specification, serve to explain the principles of the disclosure.
FIG. 1 is a configuration diagram of an emergency landing port according to an embodiment.
FIG. 2 is a plan view of the emergency landing port according to the embodiment.
FIG. 3 is a block diagram of a schematic control configuration of the emergency landing port according to the embodiment.
FIG. 4 is a flowchart illustrating a flow of a discharge process of an unmanned aircraft by the emergency landing port according to the embodiment.
FIG. 5 describes the discharge process when the unmanned aircraft is accessible to a worker.
FIG. 6 describes the discharge process when the unmanned aircraft is inaccessible to the worker.

### DETAILED DESCRIPTION

Battery fire may be possibly re-ignited even after extinction if electricity remains in the battery. Accordingly, it is desirable that, for example, a port where a mobile body makes emergency landing includes facilities for optimal battery discharge.

It is desirable to provide a liquid circulator that makes it possible to allow a battery of a mobile body to discharge optimally.

In the following, some example embodiments of the disclosure are described in detail with reference to the accompanying drawings. Note that the following description is directed to illustrative examples of the disclosure and not to be construed as limiting to the disclosure. Factors including, without limitation, numerical values, shapes, materials, components, positions of the components, and how the components are coupled to each other are illustrative only and not to be construed as limiting to the disclosure. Further, elements in the following example embodiments which are not recited in a most-generic independent claim of the disclosure are optional and may be provided on an as-needed basis. The drawings are schematic and are not intended to be drawn to scale. Throughout the present specification and the drawings, elements having substantially the same function and configuration are denoted with the same reference numerals to avoid any redundant description.

### [Configuration of Emergency Landing Port]

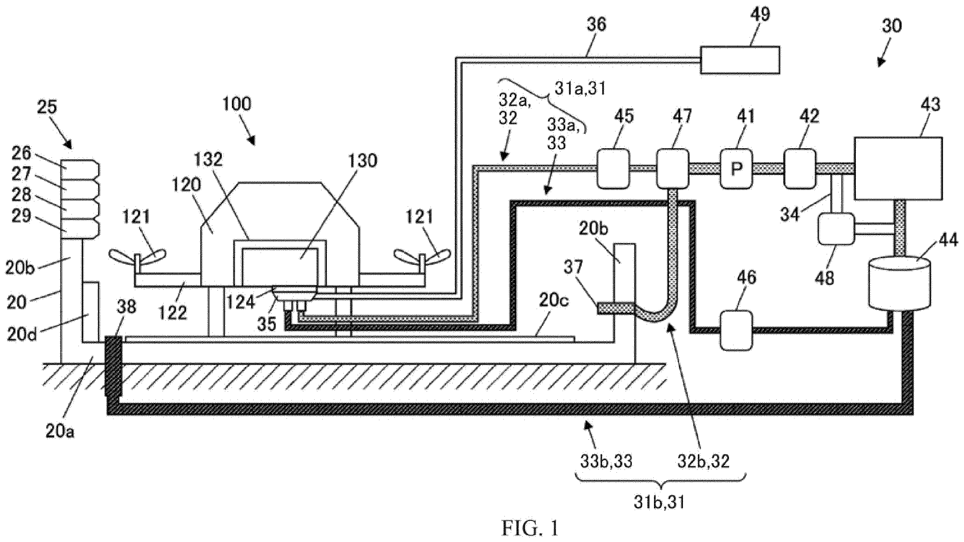

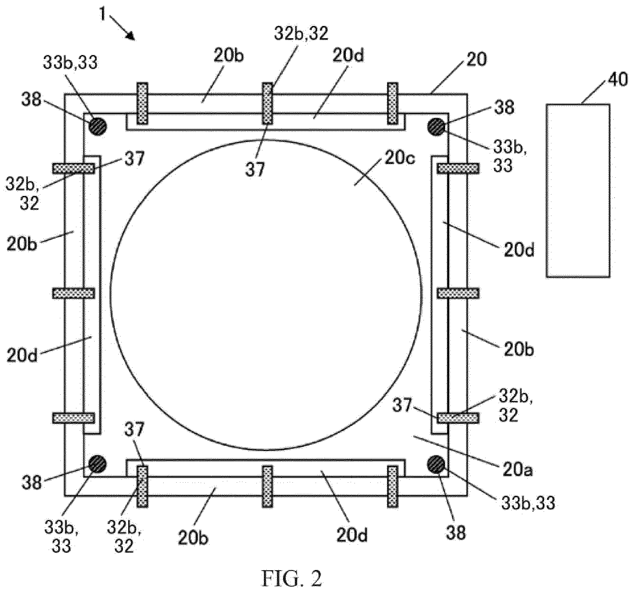

FIG. 1 is a configuration diagram of an emergency landing port 1 according to an embodiment. FIG. 2 is a plan view of the emergency landing port 1.

As illustrated in FIGs. 1 and 2, the emergency landing port 1 according to this embodiment is a landing field where an unmanned aircraft 100 makes emergency landing when detecting an abnormality. In one embodiment of the disclosure, the emergency landing port 1 may serve as a "liquid circulator". In one embodiment of the disclosure, the unmanned aircraft 100 may serve as a "moving body".

The unmanned aircraft 100 may include, for example, a multicopter configured to make flight including vertical take-off and vertical landing by rotor blades 121, i.e., propellers. For example, the unmanned aircraft 100 may include a main body 120 and the rotor blades 121.

The rotor blades 121 may be provided at tips of arms 122 extending from the main body 120 in all directions.

The main body 120 may be shaped as a rectangular box and include, for example, a battery 130. The battery 130 may supply electric power to each unit of the unmanned aircraft 100. For example, the battery 130 may be detachably housed in a battery shelf 132.

The main body 120 may include a connector seat 124 to which a connector 35 described later, i.e., a plug, is coupled. The connector seat 124 may be exposed in, for example, a lower surface of the main body 120. The connector seat 124 is configured to allow the connector 35 to be attached from outside.

The emergency landing port 1 may include, for example, a landing base 20 and a circulator 30. The landing base 20 may serve as a landing site for the unmanned aircraft 100. The circulator 30 may circulate a discharge process liquid through the unmanned aircraft 100. The discharge process liquid is provided for discharge of the battery 130 of the unmanned aircraft 100.

The landing base 20 may be shaped as a square concave in plan view. The landing base 20 may include a bottom 20a and walls 20b. The landing base 20 may include, for example, a fire-resistant material.

On the bottom 20a of the landing base 20, a circular landing point 20c may be disposed. The landing point 20c indicates the landing site for the unmanned aircraft 100.

Inside the landing base 20, steps 20d may be disposed along inner surfaces of the walls 20b. The steps 20d may allow a worker to climb up and down.

In one example, the landing base 20 may have an easily replaceable structure such as an assembly because the landing base 20 may possibly be damaged by the emergency landing of the unmanned aircraft 100.

As described later, the landing base 20 may also serve as a reservoir tank for the discharge process liquid for the discharge of the battery 130. Accordingly, heights of the walls 20b may be set to allow the landing base 20 to store the discharge process liquid to a depth enough to submerge the battery 130 of the unmanned aircraft 100 when the unmanned aircraft 100 lands on the bottom 20a. In other words, the heights of the walls 20b may be higher than a position of the battery 130 of the unmanned aircraft 100 that has landed on the bottom 20a. In one embodiment of the disclosure, the landing base 20 may serve as a "reservoir".

The landing base 20 may include a device unit 25. The device unit 25 may include various devices that provide the unmanned aircraft 100 with, for example, assistance in the emergency landing. There are no particular limitations on where to install the device unit 25, but the device unit 25 may be disposed, for example, on tops of the walls 20b.

The device unit 25 in this embodiment may include a guidance device 26, a fire extinguishing agent discharge port 27, various sensors 28, and an inert gas discharge port 29.

The guidance device 26 may guide the unmanned aircraft 100 to the landing point 20c during landing operation. The guidance device 26 may include, for example, guidance radar, i.e., a light emitter, and a communicator. The guidance radar may guide the unmanned aircraft 100. The communicator may transmit position data regarding the emergency landing port 1.

The fire extinguishing agent discharge port 27 may be coupled to a tank or a cylinder of a fire extinguishing agent and configured to discharge the fire extinguishing agent toward the unmanned aircraft 100 that has landed on the landing point 20c.

The various sensors 28 may include various sensors configured to remotely, or non-contact, observe a state of the unmanned aircraft 100. The various sensors 28 may include, for example, a temperature sensor, a gas detector, and a voltmeter. The various sensors 28 may further include, for example, an anemometer configured to assist the unmanned aircraft 100 in the landing operation.

The inert gas discharge port 29 may be coupled to a tank or a cylinder of an inert gas and configured to discharge the inert gas toward the unmanned aircraft 100 that has landed on the landing point 20c. The inert gas prevents ignition of a gas generated by a discharge process of the battery 130.

### [Configuration of Circulator]

The circulator 30 may circulate the discharge process liquid for the discharge of the battery 130, through the unmanned aircraft 100 that has landed on the landing base 20.

There are no particular limitations on the discharge process liquid to be circulated by the circulator 30 as long as the discharge process liquid promotes the discharge of the battery 130, i.e., a battery cell. For example, the discharge process liquid may include a sodium chloride aqueous solution, e.g., salt water, having a predetermined concentration, water, an anionic surfactant described in Japanese Patent No. 6847716, or an aqueous solution of an alkali metal weakly acidic salt described in JP-A No. 2005-347162.

In one example, the circulator 30 may include a circulation passage 31 for the discharge process liquid. The circulation passage 31 may include two systems, i.e., a first circulation passage 31a and a second circulation passage 31b.

Each of the first circulation passage 31a and the second circulation passage 31b may include a supply path 32 and a recovery path 33. The supply path 32 may supply the discharge process liquid to the unmanned aircraft 100. The recovery path 33 may recover the supplied discharge process liquid. The first circulation passage 31a may include a first supply path 32a and a first recovery path 33a. The second circulation passage 31b may include a second supply path 32b and a second recovery path 33b.

Ends of the first supply path 32a and the first recovery path 33a on side on which the unmanned aircraft 100 is disposed may be coupled to the connector 35. The connector 35 is detachably attachable to the connector seat 124 of the unmanned aircraft 100. When the connector 35 is not coupled to the connector seat 124, the first supply path 32a and the first recovery path 33a may be closed inside the connector 35. When the connector 35 is coupled to the connector seat 124, the first supply path 32a and the first recovery path 33a communicate with an inside of the battery 130, or an inside of the battery shelf 132, through the connector seat 124.

Moreover, to the connector 35, an exhauster 49 may be coupled through an exhaust passage 36. The exhauster 49 may suck the gas generated from the battery 130 by the discharge process and safely recover the gas.

The second supply path 32b may include discharge ports 37 on ends of the second supply path 32b on the side on which the unmanned aircraft 100 is disposed. The discharge ports 37 may be opened in inner side surfaces of the walls 20b of the landing base 20. In this embodiment, a downstream portion of the second supply path 32b may be branched into multiple paths from the middle, e.g., from a valve 47 described later, to form the multiple discharge ports 37. The discharge ports 37 may be disposed substantially uniformly along a circumference of the walls 20b.

The second recovery path 33b may include suction ports 38 on ends of the second recovery path 33b on the side on which the unmanned aircraft 100 is disposed. The suction ports 38 may be opened in the bottom 20a of the landing base 20. In this embodiment, the second recovery path 33b may be branched into four paths from the middle, to form the four suction ports 38. The four suction ports 38 may be opened at four corners of the bottom 20a in plan view.

That is, in the second circulation passage 31b, the discharge ports 37 of the second supply path 32b and the suction ports 38 of the second recovery path 33b may communicate with each other through inner space of the landing base 20.

The first supply path 32a and the second supply path 32b may share a part of their upstream portions and may be branched off downstream of the valve 47. The valve 47 may switch supply of the discharge process liquid between the first supply path 32a, the second supply path 32b, or both.

In the circulation passage 31, a pump 41, a concentration adjuster 42, a cooler 43, a filter 44, a first measurer 45, and a second measurer 46 may be disposed. These may be integrally housed, for example, in an enclosure 40 of the circulator 30.

In this embodiment, for purposes of convenience, the filter 44 may serves as a starting point of the supply path 32 or an end point of the recovery path 33. However, there are no particular limitations on a location of the starting point of the supply path 32 or the end point of the recovery path 33 as long as the starting point of the supply path 32 or the end point of the recovery path 33 is located in a portion where the supply path 32 or the recovery path 33 is not branched into the first and second paths. For example, the pump 41 may serve as the starting point of the supply path 32 or the end point of the recovery path 33.

The pump 41 may circulate the discharge process liquid in the circulation passage 31.

The concentration adjuster 42 may adjust a concentration of the discharge process liquid flowing in the circulation passage 31. The concentration adjuster 42 may also serve as a buffer tank of the circulation passage 31.

The cooler 43 may cool the discharge process liquid flowing in the circulation passage 31. The cooler 43 may be provided in parallel with a bypass passage 34 including a bypass valve 48.

The filter 44 may remove contaminants from the discharge process liquid after the discharge process in the battery 130. To the filter 44, the first recovery path 33a and the second recovery path 33b may be individually coupled.

Each of the first measurer 45 and the second measurer 46 may include a flowmeter and a thermometer.

The pump 41, the concentration adjuster 42, and the cooler 43 may be disposed in this order from the downstream side, in an unbranched upstream portion of the supply path 32.

The first measurer 45 may be disposed downstream of the valve 47 in the first supply path 32a. The first measurer 45 may measure a flow rate and a temperature of the discharge process liquid flowing in the first supply path 32a toward the connector 35.

The second measurer 46 may be disposed on the first recovery path 33a. The second measurer 46 may measure the flow rate and the temperature of the discharge process liquid flowing in the first recovery path 33a.

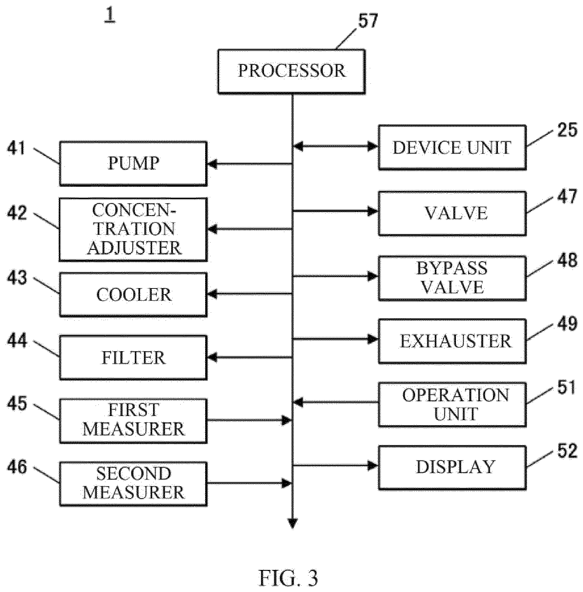

FIG. 3 is a block diagram of a schematic control configuration of the emergency landing port 1.

As illustrated in this figure, the emergency landing port 1 may include, in addition to the configuration described above, an operation unit 51, a display 52, and a processor 57.

The operation unit 51 may allow a worker, or a user, to make various operations. The operation unit 51 may include, for example, various buttons. The operation unit 51 may output an operation signal corresponding to the contents of the operations, to the processor 57.

The display 52 may include, for example, a display such as a liquid crystal display. The display 52 may display various kinds of information based on a display signal inputted from the processor 57. The display 52 may include a touchscreen that also serves as a part of the operation unit 51. Alternatively, the display 52 may include a speaker configured to perform audio display or audio output.

The processor 57 may include, for example, a CPU (Central Processing Unit). The processor 57 may control operation of each unit of the emergency landing port 1. For example, the processor 57 may expand a program held in advance in an unillustrated storage, based on the contents of the operations on the operation unit 51, and execute various kinds of processing in cooperation with the expanded program. In one embodiment of the disclosure, the processor 57 may serve as "one or more processors".

### [Discharge Process of Unmanned Aircraft at Emergency Landing Port]

Description is given next of the discharge process of the unmanned aircraft 100 to be carried out at the emergency landing port 1.

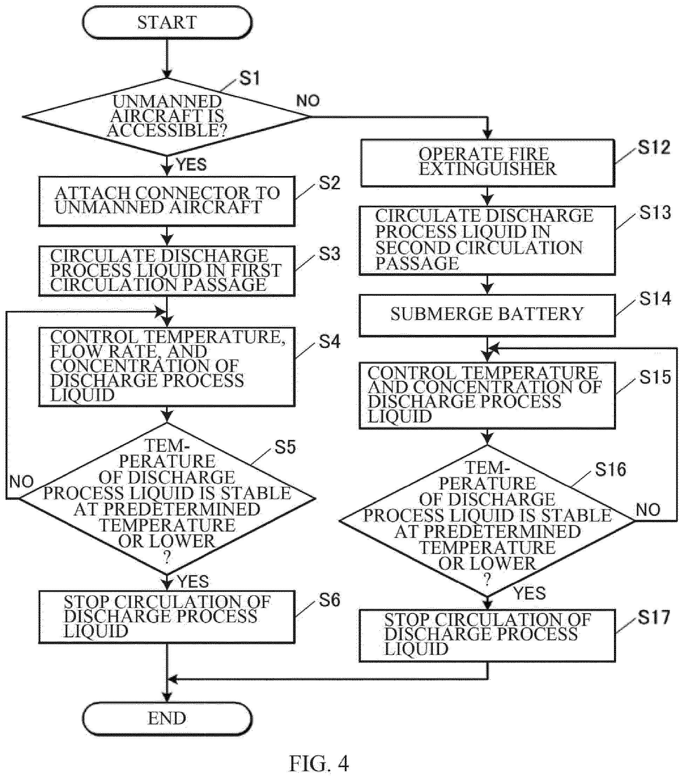

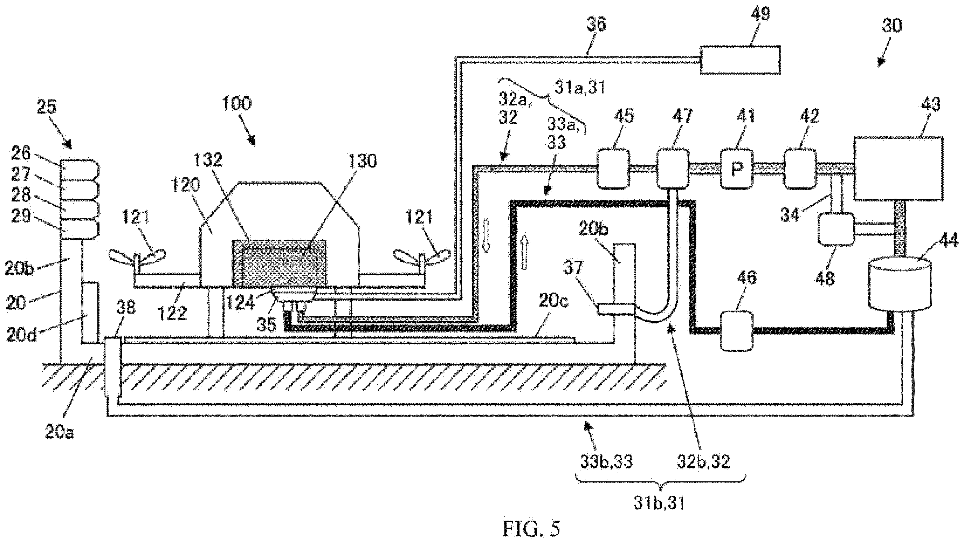

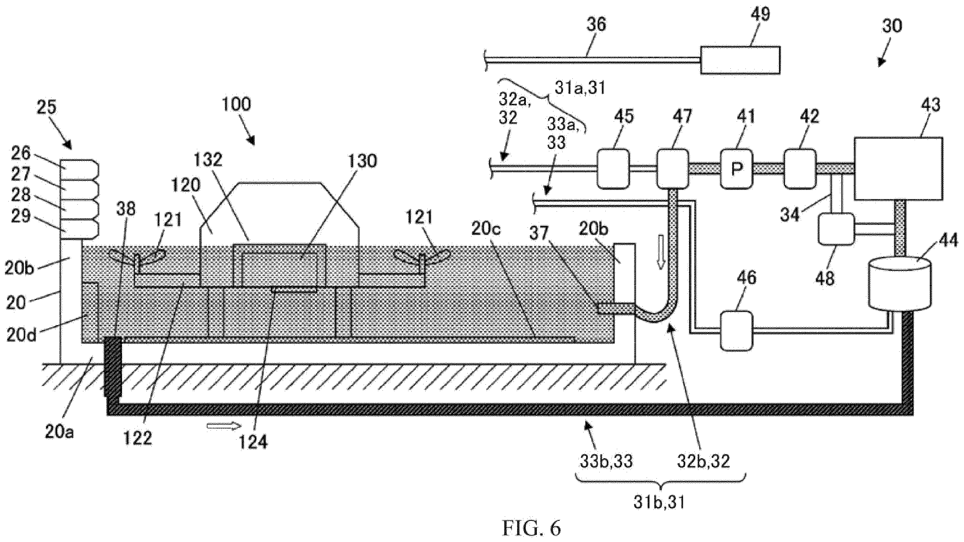

FIG. 4 is a flowchart illustrating a flow of the discharge process. FIG. 5 describes the discharge process when the unmanned aircraft 100 is accessible to the worker. FIG. 6 describes the discharge process when the unmanned aircraft 100 is inaccessible to the worker.

The emergency landing port 1 may allow the unmanned aircraft 100 that has had, for example, abnormal heat generation of the battery 130 during flight to make the emergency landing, and perform the discharge process with respect to the battery 130.

Here, it is assumed that the unmanned aircraft 100 has already landed on the landing point 20c of the landing base 20. On the occasion of the landing of the unmanned aircraft 100, the guidance device 26 or the like may assist the unmanned aircraft 100 in the landing.

As illustrated in FIG. 4, first, the worker may determine whether the unmanned aircraft 100 that has landed is safely accessible (step S1).

For example, the worker may visually check presence or absence of smoke or ignition, and determine whether the unmanned aircraft 100 is accessible. Alternatively, the worker may make the determination by using detection values of the various sensors 28, e.g., the temperature sensor or the like, of the device unit 25.

### <When Unmanned Aircraft Is Accessible to Worker>

In step S1, when it is determined that the unmanned aircraft 100 is safely accessible (step S1; Yes), the worker may attach the connector 35 of the circulator 30 to the connector seat 124 of the unmanned aircraft 100 (step S2).

Thereafter, for example, the worker may operate the operation unit 51 to bring the circulator 30 into operation, causing circulation of the discharge process liquid in the first circulation passage 31a (step S3).

Thus, as illustrated in FIG. 5, the discharge process liquid inside the concentration adjuster 42 that also serves as the buffer tank is supplied by the pump 41 to inside the battery 130, or inside the battery shelf 132, through the first supply path 32a. By the discharge process liquid, the battery 130 is cooled and starts to discharge.

The discharge process liquid supplied to the battery 130 is recovered by the filter 44 through the first recovery path 33a coupled to the connector 35, causing the contaminants to be removed. After passing through the cooler 43, or the bypass passage 34, and the concentration adjuster 42, the discharge process liquid is supplied to the battery 130 again by the pump 41.

Upon a start of the circulation of the discharge process liquid in the first circulation passage 31a, the processor 57 may control the temperature, the flow rate, and the concentration of the discharge process liquid (step S4).

In one example, the processor 57 may measure the temperature of the discharge process liquid flowing in each of the first supply path 32a and the first recovery path 33a by the first measurer 45 and the second measurer 46. The processor 57 may control operation of the cooler 43 and the bypass valve 48 based on temperature data regarding the discharge process liquid before and behind the battery 130, and control the temperature of the discharge process liquid to be circulated. Thus, for example, the discharge process liquid to be supplied to the battery 130 is maintained at a predetermined temperature or lower. It is to be noted that, instead of the respective thermometers of the first measurer 45 and the second measurer 46, a thermometer included in the cooler 43 may be used.

Moreover, the processor 57 may adjust the concentration of the discharge process liquid by the concentration adjuster 42. When the discharge process liquid includes, for example, a sodium chloride aqueous solution, or salt water, the concentration of the discharge process liquid is reduced by electrolysis. Accordingly, the concentration is adjusted to compensate for the reduction in the concentration.

Furthermore, the processor 57 may measure the flow rate of the discharge process liquid flowing in each of the first supply path 32a and the first recovery path 33a by the first measurer 45 and the second measurer 46. The processor 57 may control operation of the pump 41 based on flow rate data regarding the discharge process liquid, i.e., a difference in the flow rate between before and behind the battery 130, to adjust the flow rate of the discharge process liquid to be supplied to the battery 130. That is, the difference in the flow rate of the discharge process liquid between before and behind the battery 130 means leakage of the discharge process liquid from a case of the battery 130, or the battery shelf 132. Thus, the processor 57 may adjust the flow rate of the discharge process liquid to be supplied to the battery 130 in accordance with the difference in the flow rate of the discharge process liquid between before and behind the battery 130, for example, by increasing the supply flow rate when there is a large amount of leakage.

Furthermore, the processor 57 may bring the exhauster 49 into operation to safely recover the gas generated by the discharge of the battery 130, through the exhaust passage 36.

Thereafter, the processor 57 may determine whether the temperature of the discharge process liquid is stable at the predetermined temperature or lower (step S5). As the temperature of the discharge process liquid, a detection value of a thermometer included in the cooler 43 or the thermometer of the first measurer 45 or the second measurer 46 may be used.

The processor 57 may determine that the temperature of the discharge process liquid is stable at the predetermined temperature or lower when the discharge process liquid maintains the predetermined temperature or lower for predetermined time or longer. The predetermined temperature is, for example, a temperature at which it is determined that possibility of re-ignition of the battery 130 is sufficiently low.

When it is determined that the temperature of the discharge process liquid is not stable at the predetermined temperature or lower (step S5; No), the processor 57 may cause the flow to proceed to step S4 described above, and continue the control of the temperature, the flow rate, and the concentration of the discharge process liquid.

In step S5, when it is determined that the temperature of the discharge process liquid is stable at the predetermined temperature or lower (step S5; Yes), the processor 57 may stop the circulation of the discharge process liquid (step S6), and end the discharge process.

### <When Unmanned Aircraft Is Inaccessible to Worker>

In step S1 described above, when it is determined that the unmanned aircraft 100 is safely inaccessible to the worker because of, for example, smoke or ignition of the main body 120 (step S1; No), the worker may operate the fire extinguisher of the device unit 25 (step S12).

Thus, the fire extinguishing agent is discharged from the fire extinguishing agent discharge port 27 of the device unit 25 toward the unmanned aircraft 100 that has landed on the landing point 20c. Moreover, at this occasion, the various sensors 28 of the device unit 25 may detect, for example, the temperature of the unmanned aircraft 100 that has landed on the landing point 20c.

Thereafter, for example, the worker may operate the operation unit 51 to bring the circulator 30 into operation, causing the circulation of the discharge process liquid in the second circulation passage 31b (step S13).

At this occasion, when it is determined that the smoke or the ignition of the unmanned aircraft 100 is stopped, with the low possibility of re-ignition because, for example, the temperature has sufficiently lowered, the discharge process may be ended. In other words, step S13 may be carried out when it is determined by the worker that the smoke or the ignition has not been suppressed or that the possibility of re-ignition is present.

Thus, as illustrated in FIG. 6, the discharge process liquid in the concentration adjuster 42 that also serves as the buffer tank is discharged by the pump 41 from the discharge ports 37 to inside the landing base 20 through the second supply path 32b. The discharge process liquid is stored in the landing base 20 shaped as a concavity, to submerge the battery 130 of the unmanned aircraft 100 (step S14). In this way, the battery 130 is cooled and starts to discharge.

The discharge process liquid stored inside the landing base 20 is sucked from the suction ports 38 and recovered by the filter 44 through the second recovery path 33b, to remove the contaminants. After passing through the cooler 43, or the bypass passage 34, and the concentration adjuster 42, the discharge process liquid is supplied again by the pump 41 into inside the landing base 20.

Upon a start of the circulation of the discharge process liquid in the second circulation passage 31b, the processor 57 may control the temperature and the concentration of the discharge process liquid (step S15).

In one example, the processor 57 may measure the temperature of the discharge process liquid in the cooler 43 by, for example, the thermometer included in the cooler 43. The processor 57 may control the operation of the cooler 43 and the bypass valve 48 based on the measured temperature data regarding the discharge process liquid, and control the temperature of the discharge process liquid to be circulated. Thus, for example, the discharge process liquid to be supplied to the battery 130 is maintained at the predetermined temperature or lower.

Moreover, the processor 57 may adjust the concentration of the discharge process liquid by the concentration adjuster 42. When the discharge process liquid includes, for example, a sodium chloride aqueous solution, or salt water, the concentration of the discharge process liquid is reduced by electrolysis. Accordingly, the concentration is adjusted to compensate for the reduction in the concentration.

Furthermore, the processor 57 may cause the inert gas to be discharged from the inert gas discharge port 29 of the device unit 25 toward the unmanned aircraft 100. This leads to suppression of occurrence of ignition caused by the gas generated by the discharge of the battery 130.

Thereafter, the processor 57 may determine whether the temperature of the discharge process liquid is stable at the predetermined temperature or lower by, for example, the thermometer included in the cooler 43 (step S16).

The processor 57 may determine that the temperature of the discharge process liquid is stable at the predetermined temperature or lower when the discharge process liquid maintains the predetermined temperature or lower for the predetermined time or longer. The predetermined temperature may be, for example, the temperature at which it is determined that the possibility of re-ignition of the battery 130 is sufficiently low.

When it is determined that the temperature of the discharge process liquid is not stable at the predetermined temperature or lower (step S16; No), the processor 57 may cause the flow to proceed to step S15 described above, and continue the control of the temperature and the concentration of the discharge process liquid.

In step S16, when it is determined that the temperature of the discharge process liquid is stable at the predetermined temperature or lower (step S16; Yes), the processor 57 may stop the circulation of the discharge process liquid (step S17), and end the discharge process.

### [Effects of This Embodiment]

As described, in this embodiment, the processor 57 is configured to control the pump 41 and the cooler 43 to supply the battery 130 with the discharge process liquid at the predetermined temperature. The pump 41 is configured to circulate the discharge process liquid in the circulation passage 31. The cooler 43 is configured to cool the discharge process liquid flowing in the circulation passage 31.

This makes it possible to stably supply the battery 130 of the unmanned aircraft 100 with the discharge process liquid of which the temperature is appropriately adjusted. Hence, it is possible to allow the battery 130 of the unmanned aircraft 100 to discharge optimally.

Moreover, in this embodiment, the circulation passage 31, i.e., the first circulation passage 31a, may include the connector 35. The connector 35 may be attachable to the unmanned aircraft 100. To the connector 35, the first supply path 32a and the first recovery path 33a may be coupled.

Thus, attaching the connector 35 to the unmanned aircraft 100 makes it possible to directly supply and recover the discharge process liquid to and from the battery 130. This leads to optimal discharge of the battery 130.

Furthermore, in this embodiment, the landing base 20 is configured to store the discharge process liquid, and may have the depth enough to submerge the battery 130 of the unmanned aircraft 100 in the liquid in the landing base 20, i.e., the discharge process liquid, when the unmanned aircraft 100 stops on the bottom 20a of the landing base 20.

Hence, it is possible to submerge the battery 130 of the unmanned aircraft 100 in the discharge process liquid in the landing base 20 and allow the battery 130 of the unmanned aircraft 100 to discharge, even when the unmanned aircraft 100 is safely inaccessible.

In addition, in this embodiment, both the first circulation passage 31a and the second circulation passage 31b may be provided. The first circulation passage 31a may circulate the discharge process liquid directly through the battery 130 of the unmanned aircraft 100 by the connector 35. The second circulation passage 31b may circulate the discharge process liquid in the landing base 20. The landing base 20 is configured to submerge the battery 130.

Hence, it is possible to allow the battery 130 to discharge optimally both when the unmanned aircraft 100 is accessible to the worker and when the unmanned aircraft 100 is inaccessible to the worker.

Moreover, in this embodiment, the concentration adjuster 42 may be controlled based on the concentration of the discharge process liquid flowing in the circulation passage 31.

Hence, it is possible to supply the battery 130 with the discharge process liquid having the appropriate concentration. This leads to the optimal discharge of the battery 130.

Furthermore, in this embodiment, predetermined impurities may be removed by the filter 44 from the discharge process liquid circulating in the circulation passage 31.

Hence, it is possible to optimally remove the impurities and the like mixed in the discharge process liquid.

### [Others]

Although some example embodiments of the disclosure have been described in the foregoing by way of example with reference to the accompanying drawings, the disclosure is by no means limited to the embodiments described above inclusive of the modification examples. It should be appreciated that modifications and alterations may be made by persons skilled in the art without departing from the scope as defined by the appended claims. The disclosure is intended to include such modifications and alterations in so far as they fall within the scope of the appended claims or the equivalents thereof.

For example, it suffices that the landing base 20 of the emergency landing port 1 is configured to store the discharge process liquid. The landing base 20 may simply include, for example, a plastic pool configured to be inflated by blowing air into it. In this case, the second supply path 32b and the second recovery path 33b may include, for example, tubes to be disposed on the landing base 20. The device unit 25 may be configured to be installed independently of the landing base 20. Alternatively, the device unit 25 may be omitted when fire extinguishing equipment is separately prepared.

Thus, such simple configurations of the emergency landing port 1 make it possible to install the emergency landing port 1 at any place. For example, it is possible to optimally cope with, for example, an outdoor event.

Furthermore, in the discharge process in the forgoing embodiment, either the first circulation passage 31a or the second circulation passage 31b is used. However, for example, when the unmanned aircraft 100 is accessible but ignition occurs afterwards, both the first circulation passage 31a and the second circulation passage 31b may be used together. Such switching may be made by appropriately adjusting opening of the valve 47.

In addition, there are no particular limitations on, for example, the shape and the structure of the connector 35 to be attached to the connector seat 124 of the unmanned aircraft 100. For example, the first supply path 32a, the first recovery path 33a, and the exhaust passage 36 may be individually coupled to the unmanned aircraft 100.

Moreover, in the forgoing embodiment, description is given of an unmanned aircraft configured to make vertical takeoff and vertical landing, as an example of the moving body according to the disclosure. However, the disclosure is widely applicable to a moving body on which a battery is mounted, e.g., a vehicle, a vessel, or a toy imitating them.

In the forgoing embodiment, description is given of a case where the liquid circulator according to the disclosure is applied to an emergency landing port for an unmanned aircraft. However, the liquid circulator according to the disclosure is not limited to the emergency landing port, but widely applicable to a device configured to allow a battery to discharge.

The processor 57 of the emergency landing port 1 illustrated in FIG. 3 is implementable by circuitry including at least one semiconductor integrated circuit such as at least one processor (e.g., a central processing unit (CPU)), at least one application specific integrated circuit (ASIC), and/or at least one field programmable gate array (FPGA). At least one processor is configurable, by reading instructions from at least one machine readable non-transitory tangible medium, to perform all or a part of functions of the processor 57 of the emergency landing port 1. Such a medium may take many forms, including, but not limited to, any type of magnetic medium such as a hard disk, any type of optical medium such as a CD and a DVD, any type of semiconductor memory (i.e., semiconductor circuit) such as a volatile memory and a non-volatile memory. The volatile memory may include a DRAM and a SRAM, and the nonvolatile memory may include a ROM and a NVRAM. The ASIC is an integrated circuit (IC) customized to perform, and the FPGA is an integrated circuit designed to be configured after manufacturing in order to perform, all or a part of the functions of the processor 57 of the emergency landing port 1 illustrated in FIG. 3.

## Claims

1. A liquid circulator comprising:
a circulation passage including a supply path and a recovery path, the supply path being configured to supply a discharge process liquid to a battery of a mobile body, and the recovery path being configured to recover the supplied discharge process liquid;
a pump configured to circulate the discharge process liquid in the circulation passage;
a cooler configured to cool the discharge process liquid flowing in the circulation passage; and
one or more processors configured to control the pump and the cooler to supply the discharge process liquid at a predetermined temperature to the battery.

2. The liquid circulator according to claim 1, wherein
the circulation passage further comprises a connector attachable to the mobile body,
the supply path comprises a first supply path coupled to the connector, and
the recovery path comprises a first recovery path coupled to the connector.

3. The liquid circulator according to claim 1 or 2, further comprising a reservoir configured to store the discharge process liquid, wherein
the supply path further comprises a second supply path configured to supply the discharge process liquid to inside the reservoir,
the recovery path further comprises a second recovery path configured to recover the discharge process liquid from inside the reservoir, and
the reservoir has a depth enough to submerge the battery of the mobile body in a liquid inside the reservoir when the mobile body stops at a bottom of the reservoir.

4. The liquid circulator according to claim 1, further comprising a concentration adjuster configured to adjust a concentration of the discharge process liquid flowing in the circulation passage, wherein
the one or more processors are configured to control the concentration adjuster based on the concentration of the discharge process liquid flowing in the circulation passage.

5. The liquid circulator according to claim 1, further comprising a filter configured to remove a predetermined impurity from the discharge process fluid flowing in the circulation passage.
